(19) Europäisches Patentamt
European Patent Office
Office européen des brevets

(11) **EP 3 957 533 A2**

(12) **EUROPEAN PATENT APPLICATION**

(43) Date of publication:
**23.02.2022 Bulletin 2022/08**

(21) Application number: **21192152.3**

(22) Date of filing: **19.08.2021**

(51) International Patent Classification (IPC):
**B60W 30/18** (2012.01)   **B60W 50/14** (2020.01)

(52) Cooperative Patent Classification (CPC):
**B60W 30/18145; B60W 50/14;** B60W 2050/143;
B60W 2300/10; B60W 2300/125; B60W 2300/14;
B60W 2520/10; B60W 2520/14; B60W 2520/22;
B60W 2530/201; B60W 2530/205;
B60W 2554/4041

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.08.2020   US 202063067883 P
16.06.2021   TW 110121860**

(71) Applicant: **Cubtek Inc.
Zhubei City, Hsinchu County 302 (TW)**

(72) Inventors:
• **LI, Chun-Hsien
302 Zhubei City (TW)**

• **CHEN, Hsien-Min
302 Zhubei City (TW)**
• **QIAN, Zhao-Hao
302 Zhubei City (TW)**
• **HU, Yu-Wang
302 Zhubei City (TW)**
• **CHEN, Cheng-Foo
302 Zhubei City (TW)**
• **CHUNG, Shyh-Jong
302 Zhubei City (TW)**

(74) Representative: **Vossius & Partner
Patentanwälte Rechtsanwälte mbB
Siebertstraße 3
81675 München (DE)**

(54) **VEHICLE SENSING SYSTEM**

(57)     A vehicle sensing system is for being disposed on a vehicle. The vehicle sensing system includes a calculating unit, which includes a turning calculating module and a vehicle dimension dataset. The vehicle dimension dataset includes at least one of a wheelbase, a vehicle width, a front overhang and a rear overhang of the vehicle. The calculating unit is configured to receive a turning dataset of the vehicle. Based on the turning calculating module, the calculating unit is configured to determine an inner front wheel and an inner rear wheel. The calculating unit is configured to further determine a turning alarm zone in accordance with the vehicle dimension dataset and the turning dataset. The turning alarm zone is dependent on at least one of time and the turning dataset.

_100_

Fig. 1A

**Description**

**BACKGROUND**

Technical Field

The present disclosure relates to a vehicle sensing system. More particularly, the present disclosure relates to a vehicle sensing system for determining a turning alarm zone.

Description of Related Art

**With** the rapid developments of advanced driver assistance system (ADAS) and autopilot technology, the application requirements of the vehicle sensing systems are more and more.

For a vehicle with more than four wheels, especially a large vehicle, such as a bus, a truck and a tractor-trailer truck, when the large vehicle turns, the rear wheels thereof will shift to the turning side, which is called radius difference between inner wheels, and result a great threat to the pedestrians and other vehicles on the turning side of the large vehicle. The risk of turning right (turning to the other side of the driving seat) is the highest.

Because of the factors of the large vehicles, the wide area of the blind spot and the radius difference between inner wheels, the pedestrian or other vehicles are still exposed to high risks while merely reminding like publicizing. Among the large vehicles, the bus has a higher accident rate because the bus carrying many passengers is heavy, and it may cause the bus too late to aware of hitting other vehicles. Currently, it can be only publicized that cars, bikes and pedestrians shall keep away from the large vehicles while passing through the road, and shall keep longer distances from the large vehicles while the large vehicles are turning, in order to ensure road safety.

Therefore, there is an urgent need for a solution of a vehicle sensing system, which is featured with effectively calculating the turning alarm zone by a vehicle itself, especially a large vehicle itself, to actively prevent from traffic accidents caused by the blind spot or radius difference between inner wheels, in today's market.

**SUMMARY**

According to one aspect of the present disclosure, a vehicle sensing system is for being disposed on a vehicle, which is a single integrated vehicle. The vehicle includes a left front wheel, a right front wheel, a left rear wheel and a right rear wheel. The vehicle sensing system includes a calculating unit, which includes a turning calculating module and a vehicle dimension dataset. The vehicle dimension dataset includes at least one of a wheelbase, a vehicle width, a front overhang and a rear overhang of the vehicle. The calculating unit is configured to receive a turning dataset of the vehicle. Based on the turning calculating module, the calculating unit is configured to determine an inner front wheel and an inner rear wheel. The inner front wheel is one of the left front wheel and the right front wheel. The inner rear wheel is one of the left rear wheel and the right rear wheel that is disposed at the same side as the inner front wheel. The calculating unit is configured to further determine a turning alarm zone in accordance with the vehicle dimension dataset and the turning dataset. The turning alarm zone is dependent on at least one of time and the turning dataset.

In one embodiment, the vehicle sensing system may further include a turning sensing unit and a speed sensing unit. The turning sensing unit communicatively connected to the calculating unit is configured to provide the turning dataset of the vehicle to the calculating unit, and the turning dataset includes a yaw rate of the vehicle. The speed sensing unit communicatively connected to the calculating unit is configured to provide a vehicle speed of the vehicle to the calculating unit. Based on the turning calculating module, the calculating unit is configured to determine the turning alarm zone in accordance with the wheelbase, the vehicle width, the yaw rate and the vehicle speed of the vehicle.

In one embodiment, based on the turning calculating module, the calculating unit may be configured to determine a yaw rate related radius of the vehicle in accordance with the yaw rate and the vehicle speed thereof, and further determine a circle center, a rear wheel related radius and a front wheel related radius in accordance with the yaw rate related radius and a direction of the rear wheel related radius. The direction of the rear wheel related radius is a direction vertical to a side surface of the vehicle and passing through the inner rear wheel. The yaw rate related radius is a distance between a wheelbase center and the circle center. The rear wheel related radius is a distance between the inner rear wheel and the circle center. The front wheel related radius is a distance between the inner front wheel and the circle center.

In one embodiment, based on the turning calculating module, the calculating unit may be configured to determine the turning alarm zone in accordance with the rear wheel related radius and the front wheel related radius.

According to another aspect of the present disclosure, a vehicle sensing system is for being disposed on a vehicle, which is a tractor-trailer truck. The vehicle with a mounting axis includes a tractor and a trailer. The trailer includes a trailer left rear wheel and a trailer right rear wheel. The vehicle sensing system includes a calculating unit and an object sensing unit. The calculating unit includes a turning calculating module and a vehicle dimension dataset. The calculating unit is configured to receive a turning dataset of the tractor. The object sensing unit is communicatively connected to the calculating unit. The object sensing unit is configured to sense a position of an object outside the vehicle with respect to the vehicle. The object sensing unit is disposed on a side portion of the tractor. When an angle between the tractor and the trailer is equal to 90 degrees, the object sensing unit is not hidden by the trailer. Based on the turning calculating module, the calculating unit is configured to determine an inner rear wheel in accordance with the turning dataset. The inner rear wheel is one of the trailer left rear wheel and the trailer right rear wheel. The calculating unit is configured to further determine at least one of a trailer related length and a turning alarm zone in accordance with the vehicle dimension dataset and the turning dataset. The turning alarm zone is dependent on at least one of time and the turning dataset. When the calculating unit is configured to determine the turning alarm zone, based on the turning calculating module, the calculating unit is configured to further determine whether the position of the object sensed by the object sensing unit falls into the turning alarm zone.

In one embodiment, the vehicle dimension dataset may include at least one of a wheelbase of the tractor, a front overhang of the tractor, a rear overhang of the tractor, a distance between a wheelbase center of the tractor and the mounting axis, a trailer width, and a distance between the mounting axis and a rear wheel center of the trailer.

In one embodiment, the vehicle sensing system may further include a turning sensing unit and a speed sensing unit. The turning sensing unit communicatively connected to the calculating unit is configured to provide the turning dataset of the tractor to the calculating unit, and the turning dataset includes a yaw rate of the tractor. The speed sensing unit communicatively connected to the calculating unit is configured to provide a vehicle speed of the tractor to the calculating unit. Based on the turning calculating module, the calculating unit is configured to determine the turning alarm zone in accordance with the distance between the wheelbase center of the tractor and the mounting axis, the trailer width, the distance between the mounting axis and the rear wheel center of the trailer, the yaw rate and the vehicle speed.

In one embodiment, based on the turning calculating module, the calculating unit may be configured to determine a yaw rate related radius of the tractor in accordance with the yaw rate and the vehicle speed thereof, and further determine a circle center, a mounting axis related radius and a rear wheel related radius of the trailer in accordance with the yaw rate related radius and a direction of the rear wheel related radius of the trailer. The direction of the rear wheel related radius is a direction vertical to a side surface of the trailer and passing through the inner rear wheel. The yaw rate related radius is a distance between the wheelbase center of the tractor and the circle center. The mounting axis related radius is a distance between the mounting axis and the circle center. The rear wheel related radius is a distance between the inner rear wheel of the trailer and the circle center.

In one embodiment, based on the turning calculating module, the calculating unit may be configured to determine the turning alarm zone in accordance with the rear wheel related radius. The object sensing unit is a radar unit, and the vehicle sensing system further includes an alarm unit communicatively connected to the calculating unit. When the position of the object sensed by the object sensing unit falls into the turning alarm zone, the alarm unit is configured to generate an alarm signal.

According to further another aspect of the present disclosure, a vehicle sensing system is for being disposed on a vehicle. The vehicle with a mounting axis includes a tractor, which is able to be mounted with a trailer. The vehicle sensing system includes a calculating unit and an object sensing unit. The calculating unit includes a turning calculating module and a vehicle dimension dataset. The calculating unit is configured to receive a turning dataset of the tractor. The object sensing unit is communicatively connected to the calculating unit. The object sensing unit is configured to sense an angle between the tractor and the trailer, and is disposed on a side portion of the tractor. When the angle between the tractor and the trailer is equal to 90 degrees, the object sensing unit is not hidden by the trailer. Based on the turning calculating module, the calculating unit is configured to determine that the tractor is in a mounted state or an unmounted state in accordance with the vehicle dimension dataset, the turning dataset, and the angle between the tractor and the trailer.

In one embodiment, the vehicle dimension dataset may include at least one of a wheelbase of the tractor, a front overhang of the tractor, a rear overhang of the tractor, and a distance between a wheelbase center of the tractor and the mounting axis.

In one embodiment, the vehicle sensing system may further include a turning sensing unit and a speed sensing unit. The turning sensing unit communicatively connected to the calculating unit is configured to provide the turning dataset of the tractor to the calculating unit, and the turning dataset includes a yaw rate of the tractor. The speed sensing unit communicatively connected to the calculating unit is configured to provide a vehicle speed of the tractor to the calculating unit. The object sensing unit is configured to further sense a position of an object outside the vehicle with respect to the vehicle. Based on the turning calculating module, the calculating unit is configured to determine at least one of a trailer related length and a turning alarm zone in accordance with the distance between the wheelbase center of the tractor and the mounting axis, the yaw rate, the vehicle speed, and the angle between the tractor and the trailer, and the turning alarm zone is dependent on at least one of time and the yaw rate. When the calculating unit is configured to determine the turning alarm zone, based on the turning calculating module, the calculating unit is configured to further determine whether the position of the object sensed by the object sensing unit falls into the turning alarm zone.

In one embodiment, based on the turning calculating module, the calculating unit may be configured to define a minimum radius time as a time of the yaw rate related radius remaining to be smaller than a conditional radius. When a relative angle of the tractor with respect to the trailer remains to be smaller than a conditional angle during the minimum radius time, the tractor is determined to be in the unmounted state.

In one embodiment, based on the turning calculating module, the calculating unit may be configured to determine an inner rear wheel, which is one of a trailer left rear wheel and a trailer right wheel, in accordance with the turning dataset, determine a yaw rate related radius of the tractor in accordance with the yaw rate and the vehicle speed thereof, and further determine a circle center, a mounting axis related radius, a rear wheel related radius of the trailer and a distance between the mounting axis and a rear wheel center of the trailer in accordance with the yaw rate related radius and a direction of the yaw rate related radius. The direction of the yaw rate related radius is a direction vertical to a side surface of the tractor and passing through the wheelbase center of the tractor. The yaw rate related radius is a distance between the wheelbase center of the tractor and the circle center. The mounting axis related radius is a distance between the mounting axis and the circle center. The rear wheel related radius is a distance between the inner rear wheel of the trailer and the circle center.

In one embodiment, based on the turning calculating module, the calculating unit may be configured to determine the turning alarm zone in accordance with the rear wheel related radius. The object sensing unit is a radar unit, and the vehicle sensing system further includes an alarm unit communicatively connected to the calculating unit. When the position of the object sensed by the object sensing unit falls into the turning alarm zone, the alarm unit is configured to generate an alarm signal.

## BRIEF DESCRIPTION OF THE DRAWINGS

The present disclosure can be more fully understood by reading the following detailed description of the embodiment, with reference made to the accompanying drawings as follows:

Fig. 1A is a block diagram of a vehicle sensing system according to the 1st embodiment of the present disclosure.

Fig. 1B is a schematic view of the vehicle sensing system according to the 1st embodiment in a usage state.

Fig. 1C is a schematic view of a rear wheel related radius and a front wheel related radius of the vehicle sensing system according to the 1st embodiment during a turning procedure.

Fig. 1D, Fig. 1E, Fig. 1F, Fig. 1G and Fig. 1H are schematic views of parameters according to time points 1, 2, 3, 4, and 5, respectively, in Fig. 1C.

Fig. 2 is a block diagram of a vehicle sensing system according to the 2nd embodiment of the present disclosure.

Fig. 3A is a block diagram of a vehicle sensing system according to the 3rd embodiment of the present disclosure.

Fig. 3B is a schematic view of the vehicle sensing system according to the 3rd embodiment in a usage state.

Fig. 3C is a schematic view of a rear wheel related radius of the vehicle sensing system according to the 3rd embodiment during a turning procedure.

Fig. 3D is a schematic view of a relative angle of a tractor with respect to a trailer of the vehicle sensing system according to the 3rd embodiment during the turning procedure.

Fig. 3E, Fig. 3F, Fig. 3G, Fig. 3H and Fig. 3I are schematic views of parameters according to time points 1, 2, 3, 4, and 5, respectively, in Fig. 3C and Fig. 3D.

Fig. 4 is a block diagram of a vehicle sensing system according to the 4th embodiment of the present disclosure.

Fig. 5A is a block diagram of a vehicle sensing system according to the 5th embodiment of the present disclosure.

Fig. 5B is a schematic view of the vehicle sensing system according to the 5th embodiment in a usage state.

Fig. 5C is a schematic view of a yaw rate related radius of the vehicle sensing system according to the 5th embodiment during a turning procedure in a mounted state.

Fig. 5D is a schematic view of a relative angle of a tractor with respect to a trailer of the vehicle sensing system according to the 5th embodiment during the turning procedure in the mounted state.

Fig. 5E, Fig. 5F, Fig. 5G, Fig. 5H and Fig. 5I are schematic views of parameters according to time points 1, 2, 3, 4, and 5, respectively, in Fig. 5C and Fig. 5D.

Fig. 5J is a schematic view of the yaw rate related radius of the vehicle sensing system according to the 5th embodiment during a turning procedure in an unmounted state.

Fig. 5K is a schematic view of the relative angle of a tractor with respect to a trailer of the vehicle sensing system according to the 5th embodiment during the turning procedure in the unmounted state.

Fig. 5L, Fig. 5M, Fig. 5N, Fig. 5O and Fig. 5P are schematic views of parameters according to time points 1, 2, 3, 4, and 5, respectively, in Fig. 5J and Fig. 5K.

Fig. 6 is a block diagram of a vehicle sensing system according to the 6th embodiment of the present disclosure.

## DETAILED DESCRIPTION

**The** embodiment will be described with the drawings. For clarity, some practical details will be described below. However, it should be noted that the present disclosure should not be limited by the practical details, that is, in some embodiments, the practical details is unnecessary. In addition, for simplifying the drawings, some conventional structures and elements will be simply illustrated, and repeated elements may be represented by the same labels.

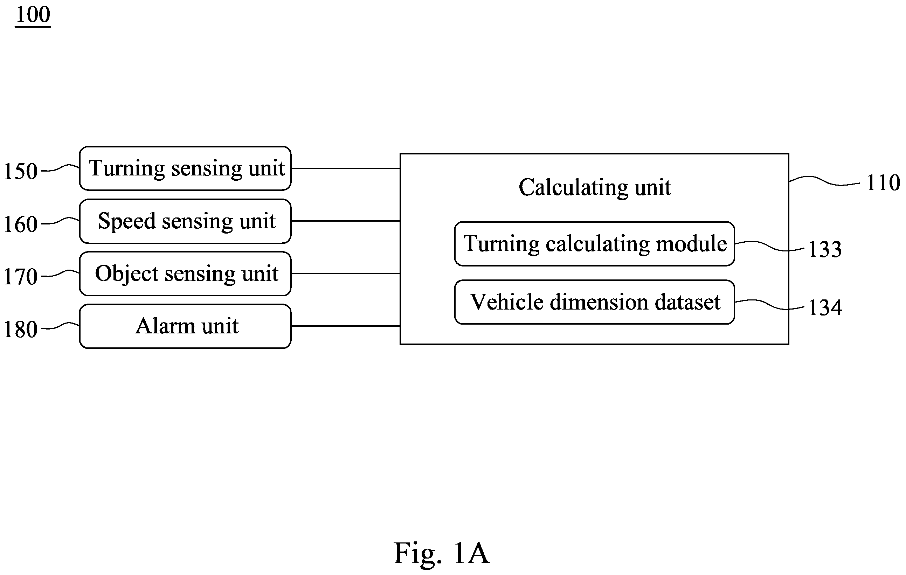

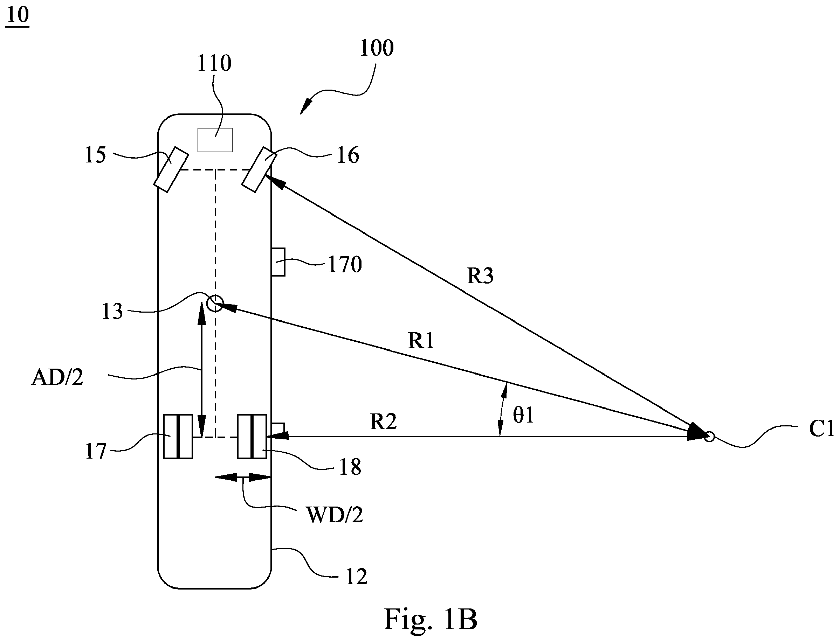

Fig. 1A is a block diagram of a vehicle sensing system 100 according to the 1st embodiment of the present disclosure, and Fig. 1B is a schematic view of the vehicle sensing system 100 according to the 1st embodiment in a usage state. With reference to Fig. 1A and Fig. 1B, the vehicle sensing system 100 is for being disposed on a vehicle 10, which is a single integrated vehicle. The vehicle 10 includes a left front wheel 15, a right front wheel, a left rear wheel 17 and a right rear wheel. The vehicle sensing system 100 includes a calculating unit 110.

The calculating unit 110 includes a turning calculating module 133 and a vehicle dimension dataset 134. The vehicle dimension dataset 134 includes data of at least one of a wheelbase AD, a vehicle width WD, a front overhang (length) and a rear overhang (length) of the vehicle 10. The calculating unit 110 is configured to receive a turning dataset of the vehicle 10. In the 1st embodiment, the calculating unit 110 is an electronic control unit (ECU) of the vehicle 10.

Based on the turning calculating module 133, the calculating unit 110 is configured to determine an inner front wheel 16 and an inner rear wheel 18. The inner front wheel 16 is one of the left front wheel 15 and the right front wheel. The inner rear wheel 18 is one of the left rear wheel 17 and the right rear wheel that is disposed at the same side of the vehicle 10 as the inner front wheel 16. For example, in Fig. 1B, the inner front wheel 16 is the right front wheel, the inner rear wheel 18 is the right rear wheel, and both the inner front wheel 16 and the inner rear wheel 18 are disposed at a turning side of the vehicle 10. The calculating unit 110 is configured to further determine a turning alarm zone in accordance with the vehicle dimension dataset 134 and the turning dataset. The turning alarm zone is dependent on time and the turning dataset, i.e., the turning alarm zone is adaptively and dynamically adjusted in accordance with time and the turning dataset. Therefore, the dynamic turning alarm zone can be calculated in accordance with the dynamic turning dataset and the pre-determined vehicle dimension dataset 134 (e.g., the wheelbase AD, the vehicle width WD, etc.) by the vehicle sensing system 100.

**The** vehicle sensing system 100 may further include a turning sensing unit 150 and a speed sensing unit 160. The turning sensing unit 150 is communicatively connected to the calculating unit 110. The turning sensing unit 150 is configured to provide the turning dataset of the vehicle 10 to the calculating unit 110, and the turning dataset includes a yaw rate w of the vehicle 10. The speed sensing unit 160 is communicatively connected to the calculating unit 110, and configured to provide a vehicle speed v of the vehicle 10 to the calculating unit 110. Based on the turning calculating module 133, the calculating unit 110 is configured to determine the turning alarm zone in accordance with the wheelbase AD, the vehicle width WD, the yaw rate $\omega$ and the vehicle speed v of the vehicle 10. Therefore, the dynamic turning alarm zone can be calculated in accordance with the yaw rate w by the vehicle sensing system 100.

Based on the turning calculating module 133, the calculating unit 110 may be configured to determine a yaw rate related radius R1 of the vehicle 10 in accordance with the yaw rate $\omega$ and the vehicle speed v thereof, and further determine a circle center (i.e., a position of a virtual circle center) C1, a rear wheel related radius R2 and a front wheel related radius R3 in accordance with the yaw rate related radius R1 and a direction of the rear wheel related radius R2. The direction of the rear wheel related radius R2 is a direction vertical (i.e., orthogonal) to a side surface 12 of the vehicle 10 and passing through a wheel axis of the inner rear wheel 18, i.e., a direction parallel to and passing through the wheel axis of the inner rear wheel 18. The yaw rate related radius R1 is a distance between a wheelbase center 13 and the circle center C1. The rear wheel related radius R2 is a distance between the inner rear wheel 18 and the circle center C1. The front wheel related radius R3 is a distance between the inner front wheel 16 and the circle center C1. Accordingly, the yaw rate related radius R1 is a time-dependent curvature radius with respect to the circle center C1. The greater a turning level (i.e., a turning degree or a turning curvedness) of the vehicle 10 is, the smaller the yaw rate related radius R1 is. The smaller the turning level of the vehicle 10 is, the greater the yaw rate related radius R1 is. Moreover, the yaw rate related radius R1 of the vehicle 10 during a turning procedure is dynamic (i.e., not a constant value), and thereby the vehicle sensing system 100 is advantageous in instantly and dynamically adjusting the turning alarm zone in accordance with the turning level of the vehicle 10.

Based on the turning calculating module 133, the calculating unit 110 may be configured to determine the turning alarm zone in accordance with the rear wheel related radius R2 and the front wheel related radius R3. Therefore, if the turning alarm zone is too large, the dangerous zone cannot be effectively distinguished. If the turning alarm zone is too small, there are still pedestrians or other vehicles outside the turning alarm zone that may be exposed to danger. The vehicle sensing system 100 with the comprehensive consideration of the rear wheel related radius R2 and the front wheel related radius R3 is beneficial to determine a proper turning alarm zone. Furthermore, according to the rear wheel related radius R2, the front wheel related radius R3 and details of the side surface 12 of the turning side in the vehicle dimension dataset 134, the turning calculating module 133 can be employed to estimate and calculate the yaw rate ω, the vehicle speed v and a possible trajectory range of the side surface 12 of the turning side of the vehicle 10 for the next time point to further determine the turning alarm zone.

Specifically, based on the turning calculating module 133, when the yaw rate is ω, the vehicle speed is v, the wheelbase is AD, the vehicle width is WD, the yaw rate related radius is R1, and the rear wheel related radius of the vehicle 10 is R2, the following conditions of Equation (1.1) and Equation (1.2) are satisfied:

$$\omega = \frac{v}{R1} \quad (1.1);$$

and

$$\sqrt{(R1)^2 - \left(\frac{AD}{2}\right)^2} - \frac{WD}{2} = R2 \quad (1.2).$$

In the 1st embodiment, the known parameters in Equation (1.1) and Equation (1.2) are the yaw rate ω, the vehicle speed v, the wheelbase AD and the vehicle width WD, and the to-be-determined parameter is the yaw rate related radius R1, which can be calculated in accordance with the turning calculating module 133 and the aforementioned known parameters. Furthermore, an angle between a direction of the yaw rate related radius R1 and the direction of the rear wheel related radius R2 is θ1. Therefore, the trigonometric function can be employed by the vehicle sensing system 100 to calculate the dynamic turning alarm zone.

The vehicle sensing system 100 may further include an object sensing unit 170 and an alarm unit 180. The object sensing unit 170 is a radar unit and communicatively connected to the calculating unit 110. The object sensing unit 170 is configured to sense a (relative) position of an object (which may be a pedestrian or another vehicle not shown in drawings) outside the vehicle 10 with respect to the vehicle 10. A number of the object sensing unit 170 is at least one, and the object sensing unit 170 is disposed on at least one side portion, i.e., at least one of a left side potion and a right side portion, of the vehicle 10. That is, the object sensing unit 170 may be disposed on a side portion far away from the driver's seat (not shown in drawings) of the vehicle 10, and may be disposed on a side portion close to the driver's seat of the vehicle 10. A distance between the object sensing unit 170 and the ground is at least 40 cm. The alarm unit 180 is communicatively connected to the calculating unit 110. When the position of the object sensed by the object sensing unit 170 falls into the turning alarm zone, the alarm unit 180 is configured to generate an alarm signal. Accordingly, the vehicle sensing system 100 is beneficial to effectively avoid the danger caused by the phenomenon of radius difference between inner wheels. Alternately, the object sensing unit 170 may be a photographing unit or an ultrasonic sensing unit, and is not limited thereto. The alarm unit 180 may be a speaker, a buzzer, a siren, a display, a light indicator, an icon indicator, etc., to alert the driver of the vehicle 10 by a sound or light manner, and is not limited thereto.

Moreover, each of the turning sensing unit 150, the speed sensing unit 160, the object sensing unit 170 and the alarm unit 180 of the vehicle 10 may be communicatively connected to the calculating unit 110 in a wired manner, e.g., by CAN (controller area network) bus, or in a wireless manner. In another embodiment according to the present disclosure (not shown in drawings), a vehicle sensing system includes a calculating unit, but may exclude a turning sensing unit, a speed sensing unit, an object sensing unit and an alarm unit. The vehicle sensing system is configured to wiredly or wirelessly receive datasets of a yaw rate, a vehicle speed of the vehicle and a position of an object with respect to the vehicle, which are transmitted from the vehicle itself or an apparatus outside the vehicle, and then the vehicle sensing system is configured to wiredly or wirelessly transmit a signal to drive the alarm unit disposed on the vehicle itself or outside the vehicle to generate the alarm signal.

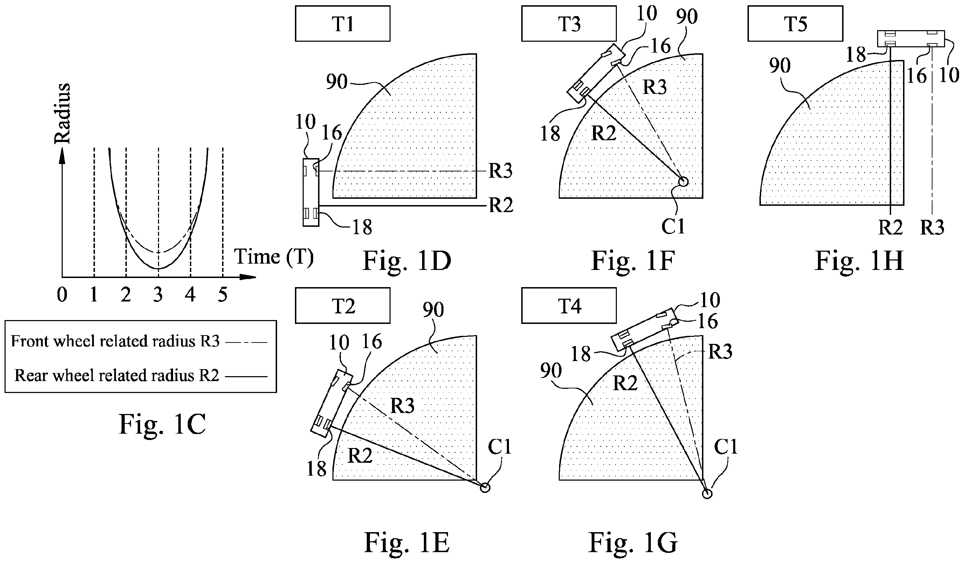

Fig. 1C is a schematic view of the rear wheel related radius R2 and the front wheel related radius R3 of the vehicle sensing system 100 according to the 1st embodiment during the turning procedure, Fig. 1D, Fig. 1E, Fig. 1F, Fig. 1G and Fig. 1H are schematic views of parameters according to time points 1, 2, 3, 4, and 5 (i.e., T1, T2, T3, T4 and T5), respectively, in Fig. 1C, and the turning procedure applied by the vehicle sensing system 100 according to the present disclosure is not limited thereto. With reference to Fig. 1C to Fig. 1H, in a driving procedure of the vehicle 10, each of the wheelbase AD and the vehicle width WD has a pre-stored and fixed value in the vehicle dimension dataset 134. Each of the yaw rate ω and the vehicle speed v is instantly sensed and time-dependent, and thereby each of the circle center C1, the rear wheel related radius R2, the front wheel related radius R3 and the turning alarm zone is also time-dependent. At the time point 1 (T1) shown in Fig. 1D, the vehicle 10 has not yet started the turning procedure, the yaw rate w is zero, the circle center C1 is located at infinity, and each of the rear wheel related radius R2 and the front wheel related radius 3 is infinite. At the time point 2 to time point 4 (T2 to T4) shown in Fig. 1E to Fig. 1G, respectively, the vehicle 10 is turning along an off-road area (non-road area) 90, and the yaw rate w is not zero. Even though when the trajectory of the vehicle 10 forms an arc with a constant radius, each of the rear wheel related radius R2 and the front wheel related radius 3 is still changed with time, and each of the rear wheel related radius R2 and the front wheel related radius 3 may have a minimum value at the time point 3. At the time point 5 (T5) shown in Fig. 1H, the vehicle 10 has finished the turning procedure, the yaw rate w is zero, the circle center C1 is located at infinity, and each of the rear wheel related radius R2 and the front wheel related radius 3 is infinite. Furthermore, it should be understood that the circle center C1, the rear wheel related radius R2 and the front wheel related radius R3 are not limited to those shown in Fig. 1E to Fig. 1G during each turning procedure, and the vehicle sensing system 100 according to the present disclosure can be employed in determining the turning alarm zone while the yaw rate w being not zero, such as intersection turning or steering, lane change and parking, and is not limited thereto.

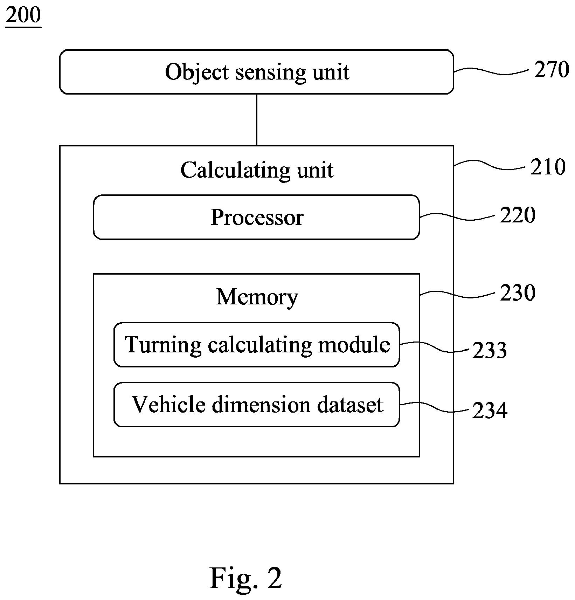

Fig. 2 is a block diagram of a vehicle sensing system 200 according to the 2nd embodiment of the present disclosure. With reference to Fig. 2, the vehicle sensing system 200 is for being disposed on a vehicle (not shown in drawings), which is a single integrated vehicle. The vehicle includes a left front wheel, a right front wheel, a left rear wheel and a right rear wheel. The vehicle sensing system 200 includes a calculating unit 210.

**The** calculating unit 210 includes a processor 220 and a memory 230. The memory 230 is configured to provide a turning calculating module 233 and a vehicle dimension dataset 234. The memory 230 is a nonvolatile memory or a non-transitory computer-readable memory, and the turning calculating module 233 is software program codes, but not limited thereto. The vehicle dimension dataset 234 includes data of at least one of a wheelbase, a vehicle width, a front overhang and a rear overhang of the vehicle. The calculating unit 210 is configured to receive a turning dataset of the vehicle.

Based on the turning calculating module 233, the calculating unit 210 is configured to determine an inner front wheel and an inner rear wheel. The inner front wheel is one of the left front wheel and the right front wheel. The inner rear wheel is one of the left rear wheel and the right rear wheel that is disposed at the same side of the vehicle as the inner front wheel. The calculating unit 210 is configured to further determine a turning alarm zone in accordance with the vehicle dimension dataset 234 and the turning dataset. The turning alarm zone is dependent on time and the turning dataset.

In the 2nd embodiment, the vehicle sensing system 200 further includes an object sensing unit 270. The object sensing unit 270 is a radar unit and communicatively connected to the calculating unit 210. The object sensing unit 270 is configured to sense a position of an object outside the vehicle with respect to the vehicle. Specifically, the vehicle sensing system 200 is a vehicle radar system including the calculating unit 210 and the at least one object sensing unit 270. The at least one object sensing unit 270 is disposed on at least one side portion. The vehicle sensing system 200 is configured to wiredly or wirelessly receive datasets of a yaw rate and a vehicle speed of the vehicle, which are transmitted from the vehicle itself or an apparatus outside the vehicle, and then the vehicle sensing system 200 is configured to wiredly or wirelessly transmit a signal to drive an alarm unit disposed on the vehicle itself or outside the vehicle to generate an alarm signal. The contents related to the vehicle sensing system 100 according to the 1st embodiment may be referred for the other details of the vehicle sensing system 200 according to the 2nd embodiment, which are thereby not described herein.

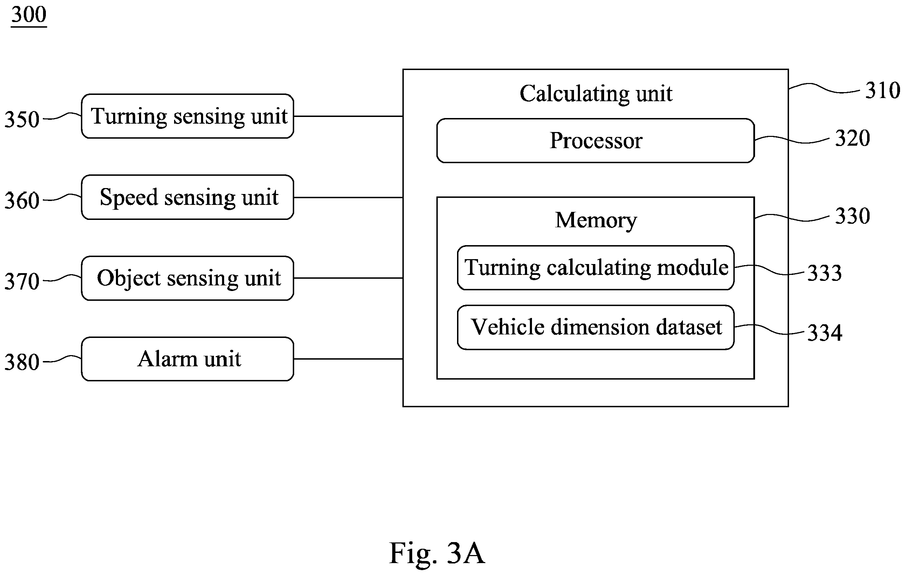

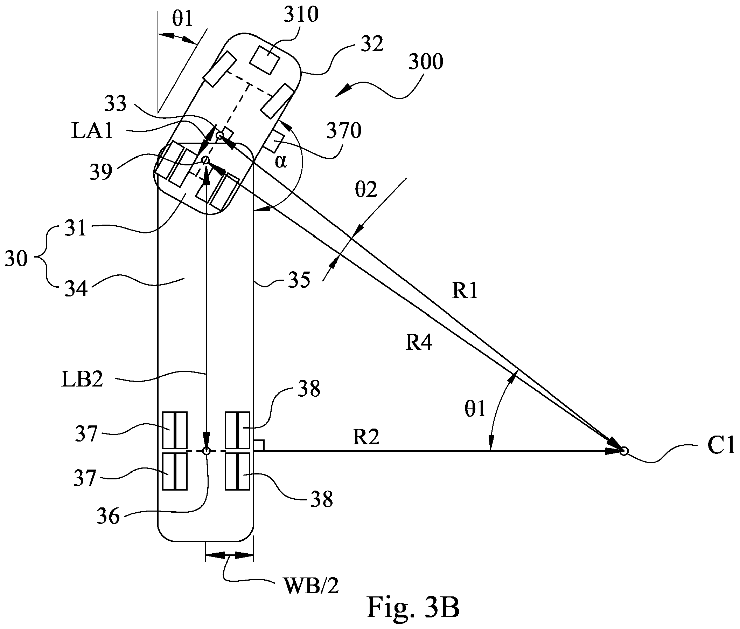

Fig. 3A is a block diagram of a vehicle sensing system 300 according to the 3rd embodiment of the present disclosure, and Fig. 3B is a schematic view of the vehicle sensing system 300 according to the 3rd embodiment in a usage state. With reference to Fig. 3A and Fig. 3B, the vehicle sensing system 300 is for being disposed on a vehicle 30, which is a tractor-trailer truck. The vehicle 30 with a mounting axis (or a mounting axle) 39 includes a tractor 31 and a trailer 34. The trailer 34 includes a trailer left rear wheel 37 and a trailer right rear wheel. The vehicle sensing system 300 includes a calculating unit 310 and an object sensing unit 370.

**The** calculating unit 310 includes a processor 320 and a memory 330. The memory 330 is configured to provide a turning calculating module 333 and a vehicle dimension dataset 334. The calculating unit 310 is an electronic control unit and configured to receive a turning dataset of the tractor 31. The object sensing unit 370 is communicatively connected to the calculating unit 310. The object sensing unit 370 is configured to sense a position of an object (which may be a pedestrian or another vehicle not shown in drawings) outside the vehicle 30 with respect to the vehicle 30. A number of the object sensing unit 370 is specifically at least one, and the object sensing unit 370 is disposed on a right side portion of the tractor 31, which is a side portion far away from the driver's seat (not shown in drawings) of the vehicle 30. When an angle $\alpha$ between the tractor 31 and the trailer 34 is equal to 90 degrees, the object sensing unit 370 is not hidden by the trailer 34.

Based on the turning calculating module 333, the calculating unit 310 is configured to determine an inner rear wheel 38 in accordance with the turning dataset. The inner rear wheel 38 is one of the trailer left rear wheel 37 and the trailer right rear wheel. For example, in Fig. 3B, the inner rear wheel 38 is the trailer right rear wheel and disposed at a turning side of the vehicle 30. The calculating unit 310 is configured to further determine at least one of a trailer related length (e.g., a distance LB2 between the mounting axis 39 and a rear wheel center 36 of the trailer 34) and a turning alarm zone in accordance with the vehicle dimension dataset 334 and the turning dataset. The turning alarm zone is dependent on time and the turning dataset, i.e., the turning alarm zone is adaptively and dynamically adjusted in accordance with time and the turning dataset. Based on the turning calculating module 333, the calculating unit 310 is configured to further determine whether the position of the object sensed by the object sensing unit 370 falls into the turning alarm zone. Therefore, the dynamic turning alarm zone can be calculated in accordance with the dynamic turning dataset and the pre-determined vehicle dimension dataset 334 by the vehicle sensing system 300.

**The** vehicle dimension dataset 334 may include data of at least one of a wheelbase of the tractor 31, a front overhang of the tractor 31, a rear overhang of the tractor 31, a distance LA1 between a wheelbase center 33 of the tractor 31 and the mounting axis 39, a trailer width WB, and the distance LB2 between the mounting axis 39 and the rear wheel center 36 of the trailer 34. Accordingly, the vehicle sensing system 300 is beneficial to effectively avoid the danger caused by the phenomenon of radius difference between inner wheels for various vehicles with different dimensions.

The vehicle sensing system 300 may further include a turning sensing unit 350 and a speed sensing unit 360. The turning sensing unit 350 is communicatively connected to the calculating unit 310. The turning sensing unit 350 is configured to provide the turning dataset of the tractor 31 to the calculating unit 310, and the turning dataset includes a yaw rate w of the tractor 31. The speed sensing unit 360 is communicatively connected to the calculating unit 310. The speed sensing unit 360 is configured to provide a vehicle speed v of the tractor 31 to the calculating unit 310. Based on the turning calculating module 333, the calculating unit 310 is configured to determine the turning alarm zone in accordance with the distance LA1 between the wheelbase center 33 of the tractor 31 and the mounting axis 39, the trailer width WB, the distance LB2 between the mounting axis 39 and the rear wheel center 36 of the trailer 34, the yaw rate $\omega$ and the vehicle speed v. Therefore, the dynamic turning alarm zone can be calculated in accordance with the yaw rate w by the vehicle sensing system 300.

Based on the turning calculating module 333, the calculating unit 310 may be configured to determine a yaw rate related radius R1 of the tractor 31 in accordance with the yaw rate $\omega$ and the vehicle speed v thereof, and further determine a circle center (i.e., a position of a virtual circle center) C1, a mounting axis related radius R4 and a rear wheel related radius R2 of the trailer 34 in accordance with the yaw rate related radius R1 and a direction of the rear wheel related radius R2 of the trailer 34. The direction of the rear wheel related radius R2 is a direction vertical (i.e., orthogonal) to a side surface 35 of the trailer 34 and passing through the inner rear wheel 38, i.e., a direction parallel to and passing through a wheel axis of the inner rear wheel 38. The yaw rate related radius R1 is a distance between the wheelbase center 33 of the tractor 31 and the circle center C1. The mounting axis related radius R4 is a distance between the mounting axis 39 and the circle center C1. The rear wheel related radius R2 is a distance between the inner rear wheel 38 of the trailer 34 and the circle center C1, and the distance is counted from a longitudinal center between two inner rear wheels 38 shown in Fig. 3B in the 3rd embodiment. Accordingly, the yaw rate related radius R1 is a time-dependent curvature radius with respect to the circle center C1. The greater a turning level of the tractor 31 is, the smaller the yaw rate related radius R1 is, and vice versa. Moreover, the yaw rate related radius R1 of the tractor 31 during a turning procedure is dynamic (i.e., not a constant value), and thereby the vehicle sensing system 300 is advantageous in instantly and dynamically adjusting the turning alarm zone in accordance with the turning level of the tractor 31.

Based on the turning calculating module 333, the calculating unit 310 may be configured to determine the turning alarm zone in accordance with the rear wheel related radius R2. The object sensing unit 370 is a radar unit distanced from the ground by at least 40 cm, may be a photographing unit or an ultrasonic sensing unit, and is not limited thereto. The vehicle sensing system 300 further includes an alarm unit 380 communicatively connected to the calculating unit 310. When the position of the object sensed by the object sensing unit 370 falls into the turning alarm zone, the alarm unit 380 is configured to generate an alarm signal. Therefore, if the turning alarm zone is too large, the dangerous zone cannot be effectively distinguished. If the turning alarm zone is too small, there are still pedestrians or other vehicles outside the turning alarm zone that may be exposed to danger. The vehicle sensing system 300 with the comprehensive consideration of the rear wheel related radius R2 is beneficial to determine a proper turning alarm zone. Furthermore, according to the rear wheel related radius R2, details of side surfaces 32 and 35 of the turning side of the tractor 31 and the trailer 34, respectively, in the vehicle dimension dataset 334, the turning calculating module 333 can be employed to estimate and calculate the yaw rate $\omega$, the vehicle speed v and possible trajectory ranges of the side surfaces 32 and 35 of the turning side of the vehicle 30 for the next time point to further determine the turning alarm zone.

Moreover, each of the turning sensing unit 350, the speed sensing unit 360, the object sensing unit 370 and the alarm unit 380 of the vehicle 30 may be communicatively connected to the calculating unit 310 in a wired manner, e.g., by CAN bus, or in a wireless manner.

Specifically, based on the turning calculating module 333, when the yaw rate is $\omega$, the vehicle speed is v, the distance between the wheelbase center 33 of the tractor 31 and the mounting axis 39 is LA1, the trailer width is WB, the distance between the mounting axis 39 and the rear wheel center 36 of the trailer 34 is LB2, the yaw rate related radius is R1, the mounting axis related radius is R4, the rear wheel related radius of the trailer 34 is R2, the angle between the tractor 31 and the trailer 34 is $\alpha$, and a relative angle of the tractor 31 with respect to the trailer 34 (equaling to an angle between a direction of the yaw rate related radius R1 and the direction of the rear wheel related radius R2) is $\theta1$, the following conditions of Equation (2.1) to Equation (2.4) are satisfied:

$$\omega = \frac{v}{R1} \quad (2.1);$$

$$\sqrt{(R1)^2 + (LA1)^2} = R4 \quad (2.2);$$

$$\sqrt{(R4)^2 - (LB2)^2} - \frac{WB}{2} = R2 \quad (2.3);$$

and

$$\theta1 = 180 - \alpha \ [\text{degrees}] \quad (2.4).$$

In the 3rd embodiment, the known parameters in Equation (2.1) to Equation (2.4) are the yaw rate $\omega$, the vehicle speed v, the distance LA1, the trailer width WB and the distance LB2, and the to-be-determined parameters are the radii R1, R4, R2, the angle $\alpha$ and the relative angle $\theta1$, which can be calculated in accordance with the turning calculating module 333 and the aforementioned known parameters. Alternately, when the object sensing unit 370 is configured to further sense the angle $\alpha$ between the tractor 31 and the trailer 34, the known parameters in Equation (2.1) to Equation (2.4) are the yaw rate $\omega$, the vehicle speed v, the distance LA1, the trailer width WB and the angle $\alpha$, and the to-be-determined parameters are the distance LB2, the radii R1, R4, R2 and the relative angle $\theta1$, which can be calculated in accordance with the turning calculating module 333 and the aforementioned known parameters, and the contents related to the vehicle sensing system 500 according to the 5th embodiment may be referred. Therefore, the trigonometric function can be employed by the vehicle sensing system 300 to calculate the dynamic turning alarm zone.

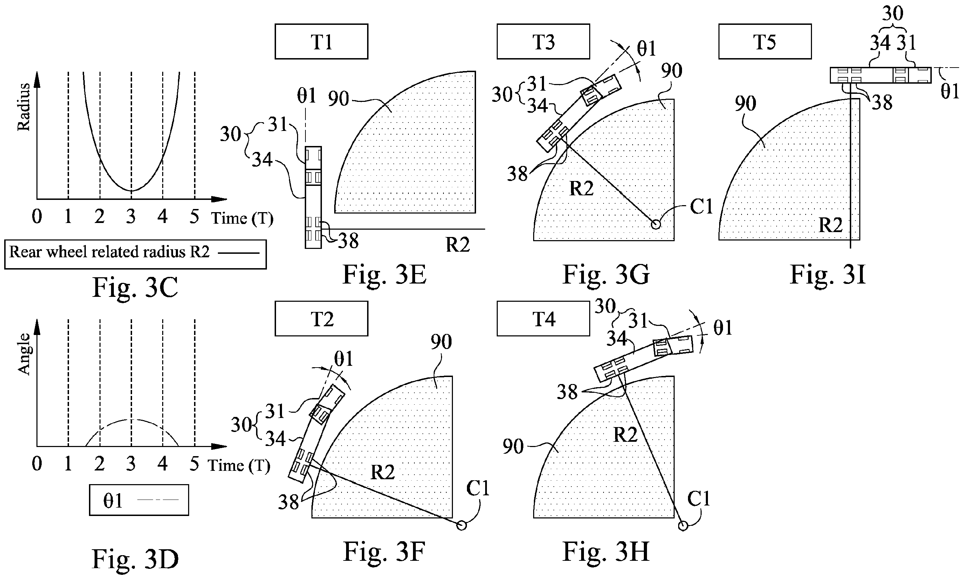

Fig. 3C is a schematic view of the rear wheel related radius R2 of the vehicle sensing system 300 according to the 3rd embodiment during the turning procedure, Fig. 3D is a schematic view of the relative angle $\theta1$ of the tractor 31 with respect to the trailer 34 of the vehicle sensing system 300 according to the 3rd embodiment during the turning procedure, Fig. 3E, Fig. 3F, Fig. 3G, Fig. 3H and Fig. 3I are schematic views of parameters according to time points 1, 2, 3, 4, and 5 (i.e., T1, T2, T3, T4 and T5), respectively, in Fig. 3C and Fig. 3D, and the turning procedure applied by the vehicle sensing system 300 according to the present disclosure is not limited thereto. With reference to Fig. 3C to Fig. 3I, in a driving procedure of the vehicle 30, each of the distance LA1 between the wheelbase center 33 of the tractor 31 and the mounting axis 39, the trailer width WB, and the distance LB2 between the mounting axis 39 and the rear wheel center 36 of the trailer 34 has a pre-stored and fixed value in the vehicle dimension dataset 334. Each of the yaw rate $\omega$ and the vehicle speed v is instantly sensed and time-dependent, and thereby each of the circle center C1, the relative angle $\theta1$ of the tractor 31 with respect to the trailer 34, the rear wheel related radius R2 and the turning alarm zone is also time-dependent. At the time point 1 (T1) shown in Fig. 3E, the vehicle 30 has not yet started the turning procedure, each of the yaw rate $\omega$ and the relative angle $\theta1$ is zero, the circle center C1 is located at infinity, and the rear wheel related radius R2 is infinite. At the time point 2 to time point 4 (T2 to T4) shown in Fig. 3F to Fig. 3H, respectively, the vehicle 30 is turning along an off-road area 90, and each of the yaw rate ω and the relative angle θ1 is not zero. Even though when the trajectory of the vehicle 30 forms an arc with a constant radius, each of the rear wheel related radius R2 and the relative angle θ1 is still changed with time, the rear wheel related radius R2 may have a minimum value at the time point 3, and the relative angle θ1 may have a maximum value at the time point 3. At the time point 5 (T5) shown in Fig. 3I, the vehicle 30 has finished the turning procedure, each of the yaw rate ω and the relative angle θ1 is zero, the circle center C1 is located at infinity, and the rear wheel related radius R2 is infinite. Furthermore, it should be understood that the circle center C1, the rear wheel related radius R2 and the relative angle θ1 are not limited to those shown in Fig. 3F to Fig. 3H during each turning procedure, and the vehicle sensing system 300 according to the present disclosure can be employed in determining the turning alarm zone while the yaw rate w being not zero, such as intersection turning or steering, lane change and parking, and is not limited thereto.

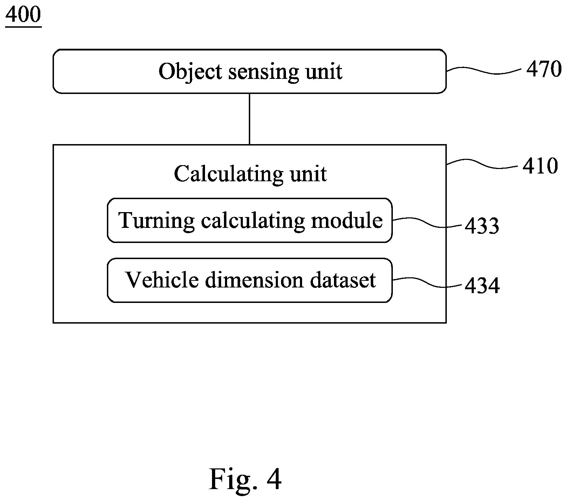

Fig. 4 is a block diagram of a vehicle sensing system 400 according to the 4th embodiment of the present disclosure. With reference to Fig. 4, the vehicle sensing system 400 is for being disposed on a vehicle (not shown in drawings), which is a tractor-trailer truck. The vehicle with a mounting axis includes a tractor and a trailer. The trailer includes a trailer left rear wheel and a trailer right rear wheel. The vehicle sensing system 400 includes a calculating unit 410 and an object sensing unit 470.

**The** calculating unit 410 includes a turning calculating module 433 and a vehicle dimension dataset 434. The calculating unit 410 is configured to receive a turning dataset of the tractor. The object sensing unit 470 is communicatively connected to the calculating unit 410. The object sensing unit 470 is configured to sense a position of an object outside the vehicle with respect to the vehicle. A number of the object sensing unit 470 is at least one, and the object sensing unit 470 is disposed on at least one side portion of the tractor. When an angle between the tractor and the trailer is equal to 90 degrees, the object sensing unit 470 is not hidden by the trailer.

Based on the turning calculating module 433, the calculating unit 410 is configured to determine an inner rear wheel in accordance with the turning dataset. The inner rear wheel is one of the trailer left rear wheel and the trailer right rear wheel. The calculating unit 410 is configured to further determine a turning alarm zone in accordance with the vehicle dimension dataset 434 and the turning dataset. The turning alarm zone is dependent on time and the turning dataset. Based on the turning calculating module 433, the calculating unit 410 is configured to further determine whether the position of the object sensed by the object sensing unit 470 falls into the turning alarm zone.

Specifically, the vehicle sensing system 400 is a vehicle radar system including the calculating unit 410 and the object sensing unit 470. The vehicle sensing system 400 is configured to wiredly or wirelessly receive datasets of a yaw rate and a vehicle speed of the vehicle, which are transmitted from the vehicle itself or an apparatus outside the vehicle, and then the vehicle sensing system 400 is configured to wiredly or wirelessly transmit a signal to drive an alarm unit disposed on the vehicle itself or outside the vehicle to generate an alarm signal. The contents related to the vehicle sensing system 300 according to the 3rd embodiment may be referred for the other details of the vehicle sensing system 400 according to the 4th embodiment, which are thereby not described herein.

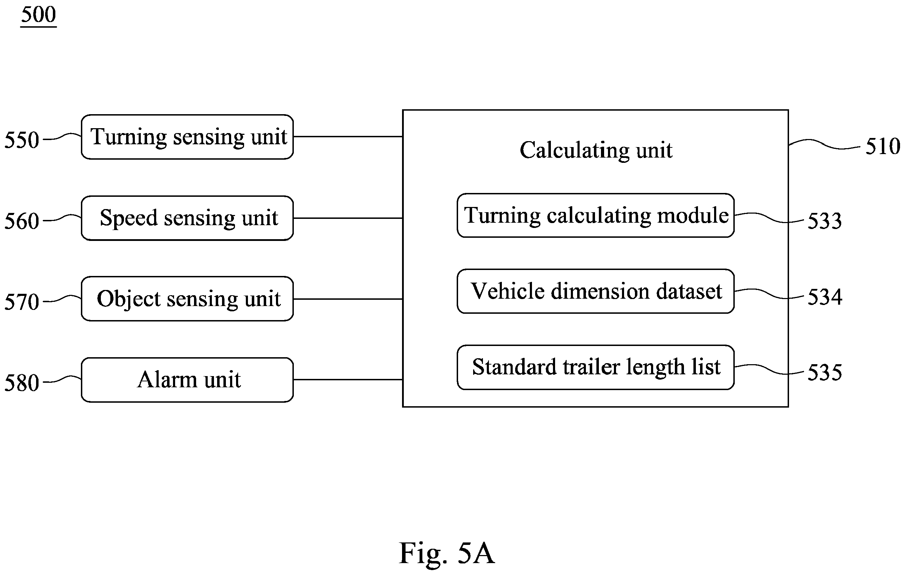

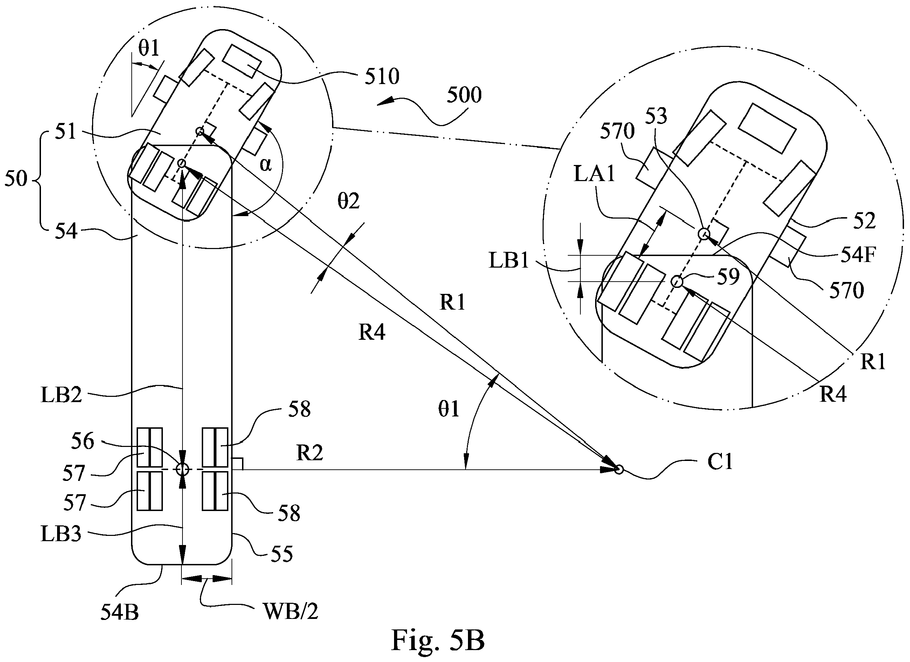

Fig. 5A is a block diagram of a vehicle sensing system 500 according to the 5th embodiment of the present disclosure, and Fig. 5B is a schematic view of the vehicle sensing system 500 according to the 5th embodiment in a usage state. With reference to Fig. 5A and Fig. 5B, the vehicle sensing system 500 is for being disposed on a vehicle 50. The vehicle 50 with a mounting axis 59 includes a tractor 51, which is able to be mounted with (i.e., connected to and linked to) a trailer 54 or other trailer. The vehicle sensing system 500 includes a calculating unit 510 and an object sensing unit 570.

**The** calculating unit 510 includes a turning calculating module 533 and a vehicle dimension dataset 534. The calculating unit 510 is an electronic control unit and configured to receive a turning dataset of the tractor 51. The object sensing unit 570 is communicatively connected to the calculating unit 510. The object sensing unit 570 is configured to sense a position of an object (which may be a pedestrian or another vehicle not shown in drawings) outside the vehicle 50 with respect to the vehicle 50, and sense an angle α between the tractor 51 and the trailer 54. A number of the object sensing unit 570 is specifically at least two, and the two object sensing units 570 are disposed on two side portions (i.e., a left side portion and a right side portion), respectively, of the tractor 51. When the angle α between the tractor 51 and the trailer 54 is equal to 90 degrees, the object sensing units 570 are not hidden by the trailer 54.

Based on the turning calculating module 533, the calculating unit 510 is configured to determine that the tractor 51 is in a mounted state or an unmounted state in accordance with the vehicle dimension dataset 534, the turning dataset, and the angle α between the tractor 51 and the trailer 54. For example, when the angle α sensed is irrelevant to the turning dataset and remains a constant value about 180 degrees, the tractor 51 is determined to be in the unmounted state. Alternately, the calculating unit 510 is configured to determine that a trailer length LB is greater than or equal to zero. The trailer length LB being greater than zero represents the tractor 51 being in the mounted state, that is, the tractor 51 is mounted with the trailer 54 or other trailer. The trailer length LB being equal to zero represents the tractor 51 being in the unmounted state, that is, the tractor 51 is not mounted with any trailer. Based on the turning calculating module 533, the calculating unit 510 is configured to determine whether the position of the object sensed by any one of the object sensing units 570 falls into a turning alarm zone. Therefore, the vehicle sensing system 500 is advantageous in determining that the tractor 51 is in the mounted state or the unmounted state when neither the tractor 51 being or being not mounted with a trailer (e.g., the trailer 54) nor the dimension information of the mounted trailer is known, and advantageous in further calculating the turning alarm zone associated with the dimension of the mounted trailer.

The vehicle dimension dataset 534 may include data of at least one of a wheelbase of the tractor 51, a front overhang of the tractor 51, a rear overhang of the tractor 51, and a distance LA1 between a wheelbase center 53 of the tractor 51 and the mounting axis 59. Accordingly, the vehicle sensing system 500 is beneficial to effectively avoid the danger caused by the phenomenon of radius difference between inner wheels for various vehicle dimensions.

**The** vehicle sensing system 500 may further include a turning sensing unit 550 and a speed sensing unit 560. The calculating unit 510 further includes a standard trailer length list 535. The turning sensing unit 550 is communicatively connected to the calculating unit 510. The turning sensing unit 550 is configured to provide the turning dataset of the tractor 51 to the calculating unit 510, and the turning dataset includes a yaw rate w of the tractor 51. The speed sensing unit 560 is communicatively connected to the calculating unit 510 and is configured to provide a vehicle speed v of the tractor 51 to the calculating unit 510. Based on the turning calculating module 533, the calculating unit 510 is configured to determine a trailer related length (e.g., a distance LB2 between the mounting axis 59 and a rear wheel center 56 of the trailer 54, and the trailer length LB) and the turning alarm zone in accordance with the distance LA1 between the wheelbase center 53 of the tractor 51 and the mounting axis 59, the yaw rate $\omega$, the vehicle speed v, the angle $\alpha$ between the tractor 51 and the trailer 54, and the standard trailer length list 535. The turning alarm zone is dependent on time and the turning dataset (e.g., the yaw rate w), i.e., the turning alarm zone is adaptively and dynamically adjusted in accordance with time and the turning dataset. When the calculating unit 510 is configured to determine the turning alarm zone, based on the turning calculating module 533, the calculating unit 510 is configured to determine whether the position of the object sensed by any one of the object sensing units 570 falls into the turning alarm zone. Therefore, the trailer related length and the dynamic turning alarm zone can be calculated in accordance with the yaw rate w by the vehicle sensing system 500.

Based on the turning calculating module 533, the calculating unit 510 may be configured to determine an inner rear wheel 58, which is one of a trailer left rear wheel 57 and a trailer right wheel, in accordance with the turning dataset. For example, in Fig. 5B, the inner rear wheel 58 is the trailer right rear wheel and disposed at a turning side of the vehicle 50. The calculating unit 510 is configured to determine a yaw rate related radius R1 of the tractor 51 in accordance with the yaw rate $\omega$ and the vehicle speed v thereof, and further determine a circle center (i.e., a position of a virtual circle center) C1, a mounting axis related radius R4, a rear wheel related radius R2 of the trailer 54 and the distance LB2 between the mounting axis 59 and the rear wheel center 56 of the trailer 54 in accordance with the yaw rate related radius R1 and a direction of the yaw rate related radius R1. The direction of the yaw rate related radius R1 is a direction vertical to a side surface 52 of the tractor 51 and passing through the wheelbase center 53 of the tractor 51. The yaw rate related radius R1 is a distance between the wheelbase center 53 of the tractor 51 and the circle center C1. The mounting axis related radius R4 is a distance between the mounting axis 59 and the circle center C1. The rear wheel related radius R2 is a distance between the inner rear wheel 58 of the trailer 54 and the circle center C1, and the distance is counted from a longitudinal center between two inner rear wheels 58 shown in Fig. 5B in the 5th embodiment. A direction of the rear wheel related radius R2 is a direction parallel to and passing through a wheel axis of the inner rear wheel 58. Accordingly, the yaw rate related radius R1 is a time-dependent curvature radius with respect to the circle center C1. The greater a turning level of the tractor 51 is, the smaller the yaw rate related radius R1 is, and vice versa. Moreover, the yaw rate related radius R1 of the tractor 51 during a turning procedure is dynamic (i.e., not a constant value), and thereby the vehicle sensing system 500 is advantageous in instantly and dynamically adjusting the turning alarm zone in accordance with the turning level of the tractor 51.

Based on the standard trailer length list 535, the calculating unit 510 may be configured to determine the trailer length LB and the trailer width WB in accordance with the distance LB2 between the mounting axis 59 and the rear wheel center 56 of the trailer 54. Based on the turning calculating module 533, the calculating unit 510 is configured to determine the turning alarm zone in accordance with the rear wheel related radius R2. Each of the object sensing units 570 is a radar unit distanced from the ground by at least 40 cm, may be a photographing unit or an ultrasonic sensing unit, and is not limited thereto. The vehicle sensing system 500 may further include an alarm unit 580 communicatively connected to the calculating unit 510. When the position of the object sensed by any one of the object sensing units 570 falls into the turning alarm zone, the alarm unit 580 is configured to generate an alarm signal. Therefore, if the turning alarm zone is too large, the dangerous zone cannot be effectively distinguished. If the turning alarm zone is too small, there are still pedestrians or other vehicles outside the turning alarm zone that may be exposed to danger. The vehicle sensing system 500 with the comprehensive consideration of the rear wheel related radius R2 is beneficial to determine a proper turning alarm zone. Furthermore, according to the rear wheel related radius R2, details of the side surface 52 of the turning side of the tractor 51 in the vehicle dimension dataset 534, the turning calculating module 533 can be employed to estimate and calculate the yaw rate $\omega$, the vehicle speed v and possible trajectory ranges of the side surfaces 52 and 55 of the turning side of the tractor 51 and the trailer 54, respectively, for the next time point to further determine the turning alarm zone.

Moreover, each of the turning sensing unit 550, the speed sensing unit 560, the object sensing units 570 and the alarm unit 580 of the vehicle 50 may be communicatively connected to the calculating unit 510 in a wired manner, e.g., by CAN bus, or in a wireless manner.

Specifically, based on the turning calculating module 533, the calculating unit 510 may be configured to determine the yaw rate related radius R1 of the tractor 51 in accordance with the yaw rate $\omega$ and the vehicle speed v thereof. When the distance between the wheelbase center 53 of the tractor 51 and the mounting axis 59 is LA1, the yaw rate related radius is R1, the mounting axis related radius is R4, and an angle between the direction of the yaw rate related radius R1 and a direction of the mounting axis related radius R4 is $\theta$2, the following conditions of Equation (3.1) to Equation (3.3) are satisfied:

$$\omega = \frac{v}{R1} \quad (3.1);$$

$$\sqrt{(R1)^2 + (LA1)^2} = R4 \quad (3.2);$$

and

$$\tan^{-1}\left(\frac{LA1}{R1}\right) = \theta2 \quad (3.3).$$

Therefore, the trigonometric function can be employed by the vehicle sensing system 500 to calculate the dynamic turning alarm zone, even though the tractor 51 being or being not mounted with a trailer (e.g., the trailer 54) is unknown.

Based on the turning calculating module 533 and the standard trailer length list 535, the calculating unit 510 may be configured to determine the inner rear wheel 58, which is one of the trailer left rear wheel 57 and the trailer right wheel, in accordance with the turning dataset. When the trailer length is LB, a distance between a front edge 54F of the trailer 54 and the mounting axis 59 is LB1, the distance between the mounting axis 59 and the rear wheel center 56 of the trailer 54 is LB2, a distance between the rear wheel center 56 and a rear edge 54B of the trailer 54 is LB3, the mounting axis related radius is R4, the angle between the tractor 51 and the trailer 54 is $\alpha$, a relative angle of the tractor 51 with respect to the trailer 54 (equaling to an angle between the direction of the yaw rate related radius R1 and the direction of the rear wheel related radius R2) is $\theta$1, and the angle between the direction of the yaw rate related radius R1 and the direction of the mounting axis related radius R4 is $\theta$2, the following conditions of Equation (3.4) to Equation (3.6) are satisfied:

$$\theta1 = 180 - \alpha \; [\text{degrees}] \quad (3.4);$$

$$R4 \times \sin(\theta1 - \theta2) = LB2 \quad (3.5);$$

and

$$LB1 + LB2 + LB3 = LB \quad (3.6).$$

In the 5th embodiment, the known parameters in Equation (3.1) to Equation (3.5) are the yaw rate $\omega$, the vehicle speed v, the distance LA1 and the angle $\alpha$, and the to-be-determined parameters are the radii R1, R4, the angle $\theta$2, the relative angle $\theta$1 and the distance LB2, which can be calculated in accordance with the turning calculating module 533 and the aforementioned known parameters. Therefore, the vehicle sensing system 500 is advantageous in employing the trigonometric function to calculate the distance LB2, even though the tractor 51 being or being not mounted with a trailer (e.g., the trailer 54) is unknown, and further employing the standard trailer length list 535 to calculate or estimate the trailer length LB.

In a driving procedure of the vehicle 50, the distance LA1 between the wheelbase center 53 of the tractor 51 and the mounting axis 59 has a pre-stored and fixed value in the vehicle dimension dataset 534. Each of the yaw rate ω, the vehicle speed v and the angle α between the tractor 51 and the trailer 54 is instantly sensed, known and time-dependent, and thereby each of the circle center C1, the relative angle θ1 of the tractor 51 with respect to the trailer 54, the rear wheel related radius R2 and the turning alarm zone is also time-dependent. The contents relevant to Fig. 3C to Fig. 3I in the aforementioned 3rd embodiment may be referred for details.

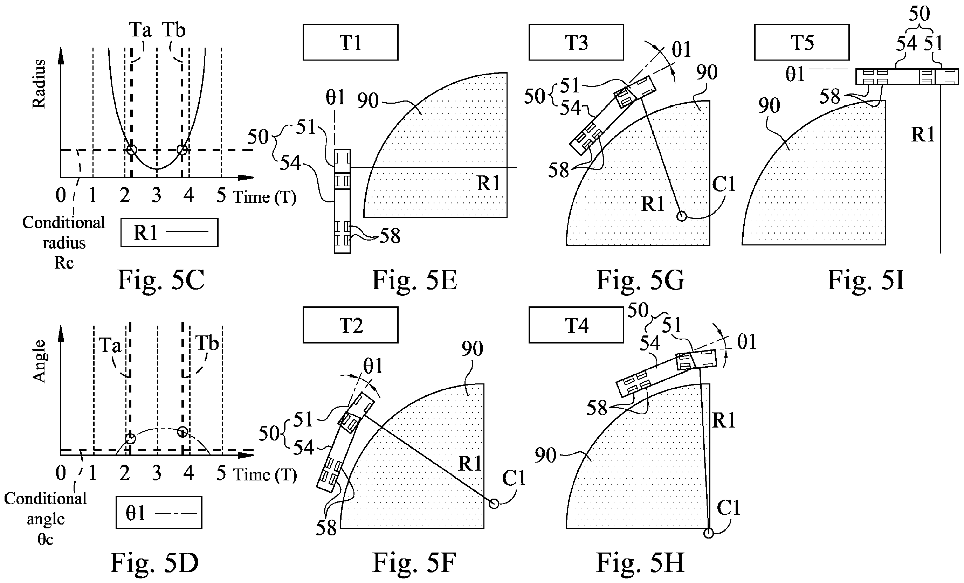

Fig. 5C is a schematic view of the yaw rate related radius R1 of the vehicle sensing system 500 according to the 5th embodiment during a turning procedure in the mounted state (e.g., the tractor 51 being mounted with the trailer 54), Fig. 5D is a schematic view of the relative angle θ1 of the tractor 51 with respect to the trailer 54 of the vehicle sensing system 500 according to the 5th embodiment during the turning procedure in the mounted state, Fig. 5E, Fig. 5F, Fig. 5G, Fig. 5H and Fig. 5I are schematic views of parameters according to time points 1, 2, 3, 4, and 5 (i.e., T1, T2, T3, T4 and T5), respectively, in Fig. 5C and Fig. 5D, and the turning procedure applied by the vehicle sensing system 500 according to the present disclosure is not limited thereto. With reference to Fig. 5C to Fig. 5I, based on the turning calculating module 533, the calculating unit 510 may be configured to define a minimum radius time as a time of the yaw rate related radius R1 remaining to be smaller than a conditional radius Rc, and the minimum radius time starts from a minimum radius starting time Ta and ends by a minimum radius ending time Tb, shown in Fig. 5C and Fig. 5D. When the relative angle θ1 of the tractor 51 with respect to the trailer 54 remains to be or is always greater than a conditional angle θc during the minimum radius time as shown in Fig. 5D, the tractor 51 is determined to be in the mounted state. That is, the trailer length LB is determined to be greater than zero, and the tractor 51 is determined to be mounted with the trailer 54 or other trailer. Furthermore, the trailer length LB, the distance LB1 between the front edge 54F of the trailer 54 and the mounting axis 59, the distance LB3 between the rear wheel center 56 and the rear edge 54B of the trailer 54 and the trailer width WB can be further determined by looking up the table and calculating in accordance with the rear wheel related radius R2, the distance LB2 between the mounting axis 59 and the rear wheel center 56 of the trailer 54, which are pre-determined, and the standard trailer length list 535. In detail, in the turning procedure of the vehicle 50, the tractor turns first and generates a turning force, the trailer 54 starts to turn after being driven by the turning force. Thus, the yaw rate related radius R1 becomes small first, and then the relative angle θ1 starts to be not zero, as an angular delay phenomenon. Moreover, when the yaw rate related radius R1 has a minimum value, the relative angle θ1 does not just have the maximum value in general.

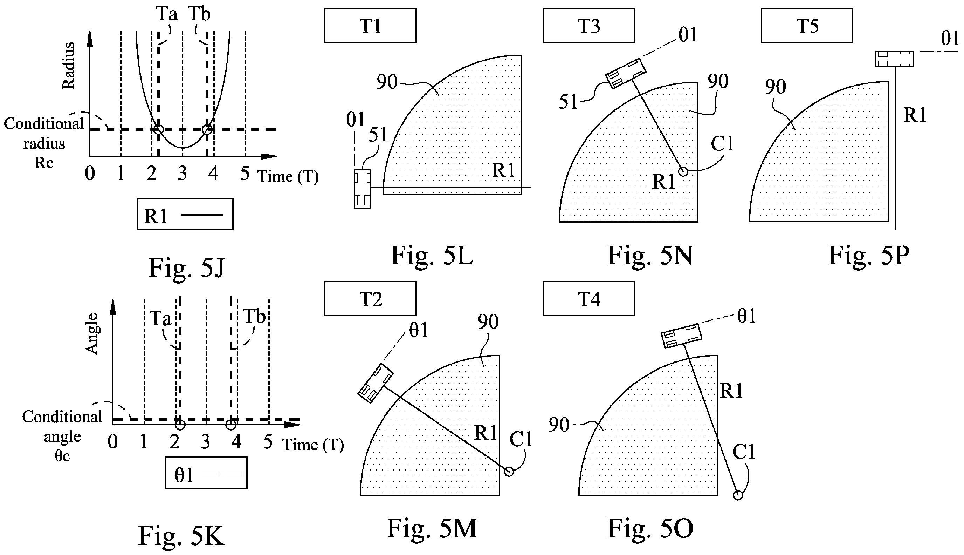

Fig. 5J is a schematic view of the yaw rate related radius R1 of the vehicle sensing system 500 according to the 5th embodiment during a turning procedure in the unmounted state (e.g., the tractor 51 being not mounted with any trailer), Fig. 5K is a schematic view of the relative angle θ1 of the tractor 51 with respect to the trailer 54 of the vehicle sensing system 500 according to the 5th embodiment during the turning procedure in the unmounted state, Fig. 5L, Fig. 5M, Fig. 5N, Fig. 5O and Fig. 5P are schematic views of parameters according to time points 1, 2, 3, 4, and 5 (i.e., T1, T2, T3, T4 and T5), respectively, in Fig. 5J and Fig. 5K, and the turning procedure applied by the vehicle sensing system 500 according to the present disclosure is not limited thereto. With reference to Fig. 5J to Fig. 5P, when the relative angle θ1 of the tractor 51 with respect to a to-be-determined trailer remains to be or is always smaller than the conditional angle θc during the minimum radius time as shown in Fig. 5K, the tractor 51 is determined to be in the unmounted state. That is, the trailer length LB is determined to be equal to zero, and the tractor 51 is determined to be not mounted with any trailer. In detail, in the turning procedure of the vehicle 50, the angle α between the tractor 51 and the to-be-determined trailer is substantial 180 degrees, which is the same as the angle α sensed under moving straight forward without turning. At the time, according to the aforementioned Equation (3.4), the relative angle θ1 is substantial zero degrees, which is smaller than the conditional angle θc. Thus, the trailer length LB is determined to be equal to zero, i.e., the tractor 51 is determined to be not mounted with any trailer. Furthermore, a cumulative number of times is added by 1 when one turning event of the tractor 51 is sensed and the unmounted state is sensed. When the continuous cumulative number of times is greater than a conditional number, the vehicle 50 is updated to be in the unmounted state to adjust the turning alarm zone. Therefore, after the vehicle 50 arriving at the destination with the cargo, the vehicle 50 will unload the trailer 54 and leave only the tractor 51 to drive for the next transportation task. Thus, for the vehicle sensing system 500 according to the present disclosure, the turning alarm zone can be adjusted with the unmounted state (i.e., a state without a mounted trailer) to achieve the alarm accuracy. Moreover, the vehicle sensing system 500 featured with the trailer sensing function is advantageous in automatically detecting whether the tractor 51 is or is not mounted with any trailer, and then updating with the corresponding trailer length LB and the corresponding turning alarm zone.

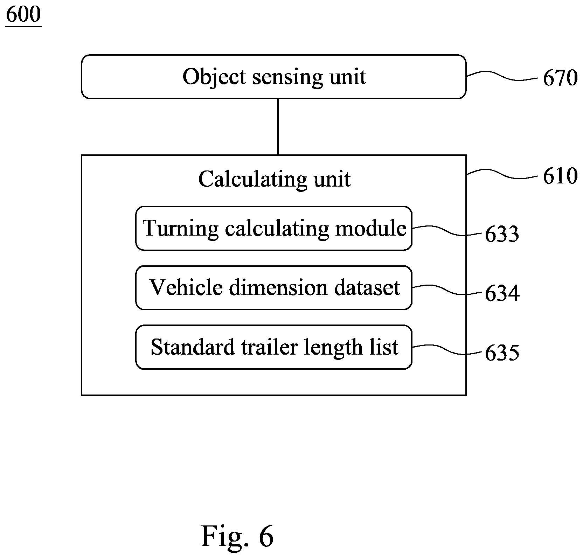

Fig. 6 is a block diagram of a vehicle sensing system 600 according to the 6th embodiment of the present disclosure. With reference to Fig. 6, the vehicle sensing system 600 is for being disposed on a vehicle (not shown in drawings). The vehicle with a mounting axis includes a tractor, which is able to be mounted with a trailer. The vehicle sensing system 600 includes a calculating unit 610 and an object sensing unit 670.

**The** calculating unit 610 includes a turning calculating module 633, a vehicle dimension dataset 634 and a standard trailer length list 635. The calculating unit 610 is configured to receive a turning dataset of the tractor. The object sensing unit 670 is communicatively connected to the calculating unit 610. The object sensing unit 670 is configured to sense a position of an object outside the vehicle with respect to the vehicle, and sense an angle between the tractor and the trailer. A number of the object sensing unit 670 is at least one, and the object sensing unit 670 is disposed on at least one side portion of the tractor. When the angle between the tractor and the trailer is equal to 90 degrees, the object sensing unit 670 is not hidden by the trailer.

Based on the turning calculating module 633, the calculating unit 610 is configured to determine a turning alarm zone and a trailer length in accordance with the vehicle dimension dataset 634, the turning dataset, the angle between the tractor and the trailer, and the standard trailer length list 635. The turning alarm zone is dependent on time and the turning dataset, and the trailer length is greater than or equal to zero. Based on the turning calculating module 633, the calculating unit 610 is configured to determine whether the position of the object sensed by the object sensing unit 670 falls into the turning alarm zone.

Specifically, the vehicle sensing system 600 is a vehicle radar system including the calculating unit 610 and at least two object sensing units 670. The vehicle sensing system 600 is configured to wiredly or wirelessly receive datasets of a yaw rate and a vehicle speed of the vehicle, which are transmitted from the vehicle itself or an apparatus outside the vehicle, and then the vehicle sensing system 600 is configured to wiredly or wirelessly transmit a signal to drive an alarm unit disposed on the vehicle itself or outside the vehicle to generate an alarm signal. The contents related to the vehicle sensing system 500 according to the 5th embodiment may be referred for the other details of the vehicle sensing system 600 according to the 6th embodiment, which are thereby not described herein.

## Claims

1. A vehicle sensing system (100), for being disposed on a vehicle (10), which is a single integrated vehicle, the vehicle (10) comprising a left front wheel (15), a right front wheel, a left rear wheel (17) and a right rear wheel, the vehicle sensing system (100) comprising:

   a calculating unit (110) comprising a turning calculating module (133) and a vehicle dimension dataset (134), wherein the vehicle dimension dataset (134) comprises at least one of a wheelbase (AD), a vehicle width (WD), a front overhang and a rear overhang of the vehicle (10), and the calculating unit (110) is configured to receive a turning dataset of the vehicle (10);
   wherein based on the turning calculating module (133), the calculating unit (110) is configured to determine an inner front wheel (16) and an inner rear wheel (18), the inner front wheel (16) is one of the left front wheel (15) and the right front wheel, the inner rear wheel (18) is one of the left rear wheel (17) and the right rear wheel that is disposed at the same side as the inner front wheel (16), the calculating unit (110) is configured to further determine a turning alarm zone in accordance with the vehicle dimension dataset (134) and the turning dataset, and the turning alarm zone is dependent on at least one of time and the turning dataset.

2. The vehicle sensing system (100) of claim 1, further comprising:

   a turning sensing unit (150) communicatively connected to the calculating unit (110), wherein the turning sensing unit (150) is configured to provide the turning dataset of the vehicle (10) to the calculating unit (110), and the turning dataset comprises a yaw rate of the vehicle (10); and
   a speed sensing unit (160) communicatively connected to the calculating unit (110), wherein the speed sensing unit (160) is configured to provide a vehicle speed of the vehicle (10) to the calculating unit (110);
   wherein based on the turning calculating module (133), the calculating unit (110) is configured to determine the turning alarm zone in accordance with the wheelbase (AD), the vehicle width (WD), the yaw rate and the vehicle speed of the vehicle (10).

3. The vehicle sensing system (100) of any of claims 1 to 2, wherein based on the turning calculating module (133), the calculating unit (110) is configured to determine a yaw rate related radius (R1) of the vehicle (10) in accordance with the yaw rate and the vehicle speed thereof, and further determine a circle center (C1), a rear wheel related radius (R2) and a front wheel related radius (R3) in accordance with the yaw rate related radius (R1) and a direction of the rear wheel related radius (R2), the direction of the rear wheel related radius (R2) is a direction vertical to a side surface (12) of the vehicle (10) and passing through the inner rear wheel (18), the yaw rate related radius (R1) is a distance between a wheelbase center (13) and the circle center (C1), the rear wheel related radius (R2) is a distance between the inner rear wheel (18) and the circle center (C1), and the front wheel related radius (R3) is a distance between the inner front wheel (16) and the circle center (C1).

4. The vehicle sensing system (100) of any of claims 1 to 3, wherein based on the turning calculating module (133), the calculating unit (110) is configured to determine the turning alarm zone in accordance with the rear wheel related radius (R2) and the front wheel related radius (R3).

5. A vehicle sensing system (300), for being disposed on a vehicle (30), which is a tractor-trailer truck, the vehicle with a mounting axis (39) comprising a tractor (31) and a trailer (34), the trailer (34) comprising a trailer left rear wheel (37) and a trailer right rear wheel, the vehicle sensing system (300) comprising:

a calculating unit (310) comprising a turning calculating module (333) and a vehicle dimension dataset (334), wherein the calculating unit (310) is configured to receive a turning dataset of the tractor (31); and
an object sensing unit (370) communicatively connected to the calculating unit (310), wherein the object sensing unit (370) is configured to sense a position of an object outside the vehicle (30) with respect to the vehicle (30), the object sensing unit (370) is disposed on a side portion of the tractor (31), and when an angle ($\alpha$) between the tractor (31) and the trailer (34) is equal to 90 degrees, the object sensing unit (370) is not hidden by the trailer (34);
wherein based on the turning calculating module (333), the calculating unit (310) is configured to determine an inner rear wheel (38) in accordance with the turning dataset, the inner rear wheel (38) is one of the trailer left rear wheel (37) and the trailer right rear wheel, the calculating unit (310) is configured to further determine at least one of a trailer related length and a turning alarm zone in accordance with the vehicle dimension dataset (334) and the turning dataset, and the turning alarm zone is dependent on at least one of time and the turning dataset;
wherein when the calculating unit (310) is configured to determine the turning alarm zone, based on the turning calculating module (333), the calculating unit (310) is configured to further determine whether the position of the object sensed by the object sensing unit (370) falls into the turning alarm zone.

6. The vehicle sensing system (300) of claim 5, wherein the vehicle dimension dataset (334) comprises at least one of a wheelbase (AD) of the tractor (31), a front overhang of the tractor (31), a rear overhang of the tractor (31), a distance (LA1) between a wheelbase center (33) of the tractor (31) and the mounting axis (39), a trailer width (WB), and a distance (LB2) between the mounting axis (39) and a rear wheel center (36) of the trailer (34).

7. The vehicle sensing system (300) of any of claims 5 to 6, further comprising:

a turning sensing unit (350) communicatively connected to the calculating unit (310), wherein the turning sensing unit (350) is configured to provide the turning dataset of the tractor (31) to the calculating unit (310), and the turning dataset comprises a yaw rate of the tractor (31); and
a speed sensing unit (360) communicatively connected to the calculating unit (310), wherein the speed sensing unit (360) is configured to provide a vehicle speed of the tractor (31) to the calculating unit (310);
wherein based on the turning calculating module (333), the calculating unit (310) is configured to determine the turning alarm zone in accordance with the distance (LA1) between the wheelbase center (33) of the tractor (31) and the mounting axis (39), the trailer width (WB), the distance (LB2) between the mounting axis (39) and the rear wheel center (36) of the trailer (34), the yaw rate and the vehicle speed.

8. The vehicle sensing system (300) of any of claims 5 to 7, wherein based on the turning calculating module (333), the calculating unit (310) is configured to determine a yaw rate related radius (R1) of the tractor (31) in accordance with the yaw rate and the vehicle speed thereof, and further determine a circle center (C1), a mounting axis related radius (R4) and a rear wheel related radius (R2) of the trailer (34) in accordance with the yaw rate related radius (R1) and a direction of the rear wheel related radius (R2) of the trailer (34), the direction of the rear wheel related radius (R2) is a direction vertical to a side surface (35) of the trailer (34) and passing through the inner rear wheel (38), the yaw rate related radius (R1) is a distance between the wheelbase center (33) of the tractor (31) and the circle center (C1), the mounting axis related radius (R4) is a distance between the mounting axis (39) and the circle center (C1), and the rear wheel related radius (R2) is a distance between the inner rear wheel (38) of the trailer (34) and the circle center (C1).

9. The vehicle sensing system (300) of any of claims 5 to 8, wherein based on the turning calculating module (333), the calculating unit (310) is configured to determine the turning alarm zone in accordance with the rear wheel related radius (R2), the object sensing unit (370) is a radar unit, and the vehicle sensing system (300) further comprises:
an alarm unit (380) communicatively connected to the calculating unit (310), wherein when the position of the object sensed by the object sensing unit (370) falls into the turning alarm zone, the alarm unit (380) is configured to generate an alarm signal.

10. A vehicle sensing system (500), for being disposed on a vehicle (50), the vehicle (50) with a mounting axis (59) comprising a tractor (51), which is able to be mounted with a trailer (54), the vehicle sensing system (500) comprising:

a calculating unit (510) comprising a turning calculating module (533) and a vehicle dimension dataset (534), wherein the calculating unit (510) is configured to receive a turning dataset of the tractor (51); and

an object sensing unit (570) communicatively connected to the calculating unit (510), wherein the object sensing unit (570) is configured to sense an angle ($\alpha$) between the tractor (51) and the trailer (54), the object sensing unit (570) is disposed on a side portion of the tractor (51), and when the angle ($\alpha$) between the tractor (51) and the trailer (54) is equal to 90 degrees, the object sensing unit (570) is not hidden by the trailer (54);

wherein based on the turning calculating module (533), the calculating unit (510) is configured to determine that the tractor (51) is in a mounted state or an unmounted state in accordance with the vehicle dimension dataset (534), the turning dataset, and the angle ($\alpha$) between the tractor (51) and the trailer (54).

11. The vehicle sensing system (500) of claim 10, wherein the vehicle dimension dataset (534) comprises at least one of a wheelbase (AD) of the tractor (51), a front overhang of the tractor (51), a rear overhang of the tractor (51), and a distance (LA1) between a wheelbase center (53) of the tractor (51) and the mounting axis (59).

12. The vehicle sensing system (500) of any of claims 10 to 11, further comprising:

a turning sensing unit (550) communicatively connected to the calculating unit (510), wherein the turning sensing unit (550) is configured to provide the turning dataset of the tractor (51) to the calculating unit (510), and the turning dataset comprises a yaw rate of the tractor (51); and

a speed sensing unit (560) communicatively connected to the calculating unit (510), wherein the speed sensing unit (560) is configured to provide a vehicle speed of the tractor (51) to the calculating unit (510);

wherein the object sensing unit (570) is configured to further sense a position of an object outside the vehicle (50) with respect to the vehicle (50);

wherein based on the turning calculating module (533), the calculating unit (510) is configured to determine at least one of a trailer related length and a turning alarm zone in accordance with the distance (LA1) between the wheelbase center (53) of the tractor (51) and the mounting axis (59), the yaw rate, the vehicle speed, and the angle ($\alpha$) between the tractor (51) and the trailer (54), and the turning alarm zone is dependent on at least one of time and the yaw rate;

wherein when the calculating unit (510) is configured to determine the turning alarm zone, based on the turning calculating module (533), the calculating unit (510) is configured to further determine whether the position of the object sensed by the object sensing unit (570) falls into the turning alarm zone.

13. The vehicle sensing system (500) of any of claims 10 to 12, wherein based on the turning calculating module (533), the calculating unit (510) is configured to define a minimum radius time as a time of the yaw rate related radius (R1) remaining to be smaller than a conditional radius (Rc), and when a relative angle ($\theta$1) of the tractor (51) with respect to the trailer (54) remains to be smaller than a conditional angle (8c) during the minimum radius time, the tractor (51) is determined to be in the unmounted state.

14. The vehicle sensing system (500) of any of claims 10 to 13, wherein based on the turning calculating module (533), the calculating unit (510) is configured to determine an inner rear wheel (58), which is one of a trailer left rear wheel (57) and a trailer right wheel, in accordance with the turning dataset, determine a yaw rate related radius (R1) of the tractor (51) in accordance with the yaw rate and the vehicle speed thereof, and further determine a circle center (C1), a mounting axis related radius (R4), a rear wheel related radius (R2) of the trailer (54) and a distance (LB2) between the mounting axis (59) and a rear wheel center (56) of the trailer (54) in accordance with the yaw rate related radius (R1) and a direction of the yaw rate related radius (R1), the direction of the yaw rate related radius (R1) is a direction vertical to a side surface (52) of the tractor (51) and passing through the wheelbase center (53) of the tractor (51), the yaw rate related radius (R1) is a distance between the wheelbase center (53) of the tractor (51) and the circle center (C1), the mounting axis related radius (R4) is a distance between the mounting axis (59) and the circle center (C1), and the rear wheel related radius (R2) is a distance between the inner rear wheel (58) of the trailer (54) and the circle center (C1).

15. The vehicle sensing system (500) of any of claims 10 to 14, wherein based on the turning calculating module (533), the calculating unit (510) is configured to determine the turning alarm zone in accordance with the rear wheel related radius (R2), the object sensing unit (570) is a radar unit, and the vehicle sensing system (500) further comprises: an alarm unit (580) communicatively connected to the calculating unit (510), wherein when the position of the object sensed by the object sensing unit (570) falls into the turning alarm zone, the alarm unit (580) is configured to generate an alarm signal.

100

Calculating unit — 110

Turning calculating module — 133

Vehicle dimension dataset — 134

Turning sensing unit — 150

Speed sensing unit — 160

Object sensing unit — 170

Alarm unit — 180

Fig. 1A

Fig. 1B

Fig. 1H

Fig. 1F

Fig. 1G

Fig. 1D

Fig. 1E

Fig. 1C

Front wheel related radius R3

Rear wheel related radius R2

Time (T)

Radius

**Fig. 2**

EP 3 957 533 A2

300

350 — Turning sensing unit

360 — Speed sensing unit

370 — Object sensing unit

380 — Alarm unit

Calculating unit — 310

Processor — 320

Memory — 330

Turning calculating module — 333

Vehicle dimension dataset — 334

Fig. 3A

Fig. 3B

EP 3 957 533 A2

Fig. 3I

Fig. 3G

Fig. 3H

Fig. 3E

Fig. 3F

Fig. 3C

Fig. 3D

400

Fig. 4

| | |
|---|---|
| 550 — Turning sensing unit | Calculating unit — 510 |
| 560 — Speed sensing unit | Turning calculating module — 533 |
| 570 — Object sensing unit | Vehicle dimension dataset — 534 |
| 580 — Alarm unit | Standard trailer length list — 535 |

Fig. 5A

Fig. 5B

EP 3 957 533 A2

EP 3 957 533 A2

## Fig. 5C

Radius

Ta Tb

0  1  2  3  4  5  Time (T)

Conditional radius Rc

R1 ⎯⎯⎯

**Fig. 5C**

## Fig. 5D

Angle

Ta  Tb

0  1  2  3  4  5  Time (T)

Conditional angle θc

θ1 ⎯ ⎯ ⎯

**Fig. 5D**

## Fig. 5E

T1

θ1  90

50 { 51  54

58

R1

**Fig. 5E**

## Fig. 5F

T2

θ1

90

50 { 51  54

58

R1

C1

**Fig. 5F**

## Fig. 5G

T3

θ1

90

50 { 51  54

58

R1  C1

**Fig. 5G**

## Fig. 5H

T4

50 { 51  54

θ1

58

90

R1

C1

**Fig. 5H**

## Fig. 5I

T5

50 { 54 51

θ1

58

90

R1

**Fig. 5I**

Fig. 5J

Fig. 5K

Fig. 5L

Fig. 5M

Fig. 5N

Fig. 5O

Fig. 5P

```
┌─────────────────────────────────────┐
│         Object sensing unit          │──── 670
└─────────────────────────────────────┘
                    │
┌─────────────────────────────────────┐
│          Calculating unit            │──── 610
│  ┌───────────────────────────────┐   │
│  │  Turning calculating module   │───┼── 633
│  └───────────────────────────────┘   │
│  ┌───────────────────────────────┐   │
│  │   Vehicle dimension dataset   │───┼── 634
│  └───────────────────────────────┘   │
│  ┌───────────────────────────────┐   │
│  │   Standard trailer length list│───┼── 635
│  └───────────────────────────────┘   │
└─────────────────────────────────────┘
```

Fig. 6

EP 3 957 533 A2